# EUROPEAN PATENT APPLICATION

(11) **EP 2 048 173 A1**
(43) Date of publication of application: **15.04.2009**
(21) Application number: 07791872.0
(22) Date of filing: 02.08.2007
(51) Int. Cl.: C08G 59/20, H01B 3/40

(54) **INSULATING POLYMER MATERIAL COMPOSITION**

(30) Priority: 02.08.2006 JP 2006210843
(71) Applicant: Meidensha Corporation, Tokyo 141-0032 (JP)
(72) Inventor: KURATA, Yasuyuki c/o Meidensha Corporation, Tokyo 141-0032 (JP); MORITA, Kozo Meidensha Corporation, Tokyo 141-0032 (JP); MIZUNO, Takehiro c/o Meidensha Corporation, Tokyo 141-0032 (JP)
(74) Representative: Manitz, Finsterwald & Partner GbR
(86) International application number: PCT/JP2007/065198
(87) International publication number: WO 2008/016119

(57) **Abstract**

An insulating polymer material composition is obtained by adequately adding a curing agent, a curing accelerator or the like to an epoxidized vegetable oil (such as an epoxidizable vegetable oil and fat which is an ester of glycerin and a fatty acid having a double bond portion therein), and heating and three-dimensionally crosslinking the resulting. As the curing agent, the curing accelerator or the like, those used for petroleum-derived polymer materials such as epoxy resins can be used. This polymer material composition is applied to, for example, insulating structures for high-voltage devices including a switching device such as a circuit breaker or disconnector in the casing.

## Description

### BACKGROUND OF THE INVENTION

The present invention relates to an insulating polymer material composition applied to, for example, an insulating structure for a high-voltage device comprising a switching device such as a circuit breaker or disconnector in the casing.

As a material applied (for example, in such a manner as to be exposed directly to the outdoors) to an insulating structure (e.g. a portion which needs the insulating property) for a voltage device (such as a high-voltage device) comprising a switching device such as a circuit breaker or disconnector in the casing, a composition obtained by curing a polymer material containing a petroleum-derived thermosetting resin (i.e. a resin using petroleum as a starting material, such as epoxy resins or the like) as a main component, for example, a product (i.e. a molded product hereinafter referred to as a polymer product) comprising a composition formed by molding the polymer material have been conventionally and widely known.

With sophistication and concentration of society, the high-voltage device and the like have been strongly desired, for example, to be reduced in size and grown in capacity while ensuring great reliability (e.g. mechanical properties and electrical properties). With this, the polymer product also has been required to improve in various properties.

In general, examples of a main component of the polymer material used in conventionally known polymer products are: epoxy resins of heat resistant type having a glass transition temperature (hereinafter referred to as "Tg") of not lower than 100 °C; bisphenol-A-type epoxy resins relatively high in mechanical properties (such as the strength); and the like. However, in consideration of disposal of the polymer product (for example, disposal due to lifespan or breakdown), a polymer product formed of a biodegradable polymer material has undergone development as discussed in Patent Document 1.

As a result of having tried in various technical fields (e.g. in Patent Document 2) to apply a composition formed by curing a plant-derived polymer material (for example, to a printed-circuit board), there became known that sufficient mechanical properties can be obtained e.g. when the product is used in room temperature atmosphere. However, this composition is formed by using aldehydes as a curing agent, and therefore it had not been applied to the high-voltage device since poor in mechanical properties in a high temperature atmosphere.

The above-discussed polymer product in which the heat resistant epoxy resins having a glass transition temperature (hereinafter referred to as "Tg") of not lower than 100 °C are used as the main component of the polymer material is rigid and fragile, and additionally raises a fear that cracks are easily formed when the polymer product is used in an environment where temperature changes frequently. In view of this, there had been made some attempts, for example, to use solid epoxy resins (e.g. those in which a result of a crack resistance test using a metal conductor is not higher than -30 °C) as the main component of the polymer material or to improve a crack resistance and the like by adding a large quantity of filler to the polymer material; however, such a polymer product is significantly increased in viscosity, and therefore there is a fear that a pot life (the shortest possible time for an industrial operation) cannot be sufficiently ensured thereby reducing workability, e.g. in a molding operation.

Though the above-discussed bisphenol-A-type epoxy resins are widely used as industrial products since they are high in mechanical properties, bisphenol A in itself is regarded as a deleterious endocrine disruptor and therefore it became concerned from the environmental point. Though there is a report that a cured composition such as the polymer product is not deleterious since bisphenol A is hard to leak out therefrom, bisphenol A is deleterious even in a very small quantity (for example, even at a ppm level or more smaller amount) and may leak into the air when unreacted bisphenol A (a low molecular-weight component) exists in the composition, which raises concern.

In a limited environment, for example, in a process for synthesizing bisphenol-A-type epoxy resins and various additives or a process for molding a polymer material obtained by the synthesizing process at a polymer product production facility, there is a fear that the environment is in an atmosphere of a high concentration of bisphenol A. Further, this raises a fear of a production cost increase, since ventilation equipment (i.e. equipment for cleaning air in the work environment) is required in each of the above-discussed processes even if each of the above-discussed production processes is carried out completely without humans in attendance (or even if production lines for the polymer product are made unattended) or since ventilation equipment which had been out of assumption in conventional techniques becomes needed.

In disposal of the polymer product (e.g. disposal due to lifespan or breakdown), various disposal methods can be employed; however, every one of the methods has problems as discussed below.

For example, if an incineration treatment method is applied to the polymer product formed of the polymer material containing the petroleum-derived substance (such as epoxy resins) as the main component, various deleterious substances and carbon dioxide are emitted in large quantity thereby causing some issues such as environmental pollution and global warming, which had been the feared point. In addition, though a mere landfill method may be applied to the above-discussed polymer product, a final disposal field ensured for the landfill method is decreasing tendency through the years. The Ministry of Health and Welfare made a trial calculation of the remaining time to determine it to be about the year 2008. Then, the Economic Planning Agency gives an assumption, based on the trial calculation provided by the Ministry of Health and Welfare, that the waste-disposal cost will rocket up around 2008 thereby depressing the economic growth rate.

Additionally, though an attempt to recall and reuse (recycle) the above-discussed polymer product is also carried out, such a recycling method is not established and therefore hardly carried out. By way of exception, components relatively equal in quality (PE cable-coating members used in the polymer product) are recalled to be used as thermal energy; however, thermal energy requires a combustion treatment process so as to sometimes cause the issues of environmental pollution, global warming and the like.

However, there is a fear also in the case where the polymer product is formed of the biodegradable polymer material, the fear being that the polymer product is melted when used in an atmosphere, for example, at temperature of not lower than 100 °C. Further, in the case where the polymer product is formed of a crosslinking composition of biological origin and uses aldehydes as the curing agent, sufficient mechanical properties may be not obtained in a high temperature atmosphere (e.g. in the work environment for high-voltage devices or the like), though obtained in an atmosphere of about room temperature (e.g. in an environment for the printed-circuit board in terms of temperature).

In view of the above, it is required to improve various problems relating to the disposal of such polymer products while keeping their properties (such as the mechanical properties and the electrical properties) excellent.
Patent Document 1: Japanese Patent Provisional Publication No. 2002-358829
Patent Document 2: Japanese Patent Provisional Publication No. 2002-053699

### SUMMARY OF THE INVENTION

It is, therefore, an object to provide an insulating polymer material composition which is environmentally excellent and able to impart sufficient properties (for example, mechanical properties and electrical properties) to a polymer product such as the high-voltage device without reducing the workability.

An aspect of the present invention resides in an insulating polymer material composition applied to an insulating structure for a voltage device. The insulating polymer material composition of the present invention comprises a polymer material containing a vegetable oil as a main component and three-dimensionally crosslinked with heat.

A further aspect of the present invention resides in an insulating polymer material composition as discussed above, wherein the vegetable oil is epoxidized.

A still further aspect of the present invention resides in an insulating polymer material composition as discussed above, wherein a curing agent is added to the polymer material.

By using vegetable oil as the main component of the polymer material as discussed above, the electrical properties (such as the insulating property) and the mechanical properties (such as the tensile strength) are sufficiently obtained (or obtained at least equally to a case where a bisphenol-A-type epoxy resin is used in the polymer material composition) even if the filler is not such a large quantity as to be used in conventional polymer products, since the vegetable oil is an ester of glycerin and a fatty acid having a sufficient molecular length.

The above-discussed polymer material composition generates neither deleterious substances nor carbon dioxide even if incinerated, and additionally is biodegradable when landfilled in soil.

### DETAILED DESCRIPTION OF THE INVENTION

Hereinafter, an embodiment of an insulating polymer material composition according to the present invention will be discussed in detail.

In this embodiment, a polymer material naturally originated and capable of three-dimensionally crosslinking is used in place of a petroleum-derived polymer material such as epoxy resins, in an insulating polymer material composition applied to a portion of a polymer product requiring an insulating property.

More specifically, the polymer material as discussed above is found to be able to ensure sufficiently excellent electrical and mechanical properties and therefore to be applied to a high-voltage device. Further, since the polymer material in itself is neutral toward carbon, a composition (e.g. a polymer product) formed of the polymer material is found to be able to prevent or suppress the emission of deleterious substances (such as endocrine disruptor) and carbon dioxide and the like even if subjected to an incineration treatment, and additionally found to be biodegradable, for example, when landfilled in soil. The naturally originated polymer material is known to be applied to a printed-circuit board; however, it has never been applied to the high-voltage device.

Examples of the polymer material naturally originated and capable of three-dimensionally crosslinking as discussed above are epoxidizable (modifiable) ones having a reactive portion in its chain, such as epoxidizable vegetable oils and fats which are esters of glycerin and a fatty acid having a double bond portion therein.

Concrete examples of the vegetable oils epoxidizable and applicable to the present invention are vegetable oils whose components are unsaturated fatty acids (e.g. linoleic acid, linolenic acid and oleic acid), such as perilla oil, linseed oil, tung oil, poppy oil, walnut oil, safflower oil, sunflower seed oil, rape oil, corn oil, cottonseed oil, soybean oil, sesame oil, rice oil and olive oil. Additionally, a mixture of two or more kinds of these vegetable oils may be applied to the present invention.

Therefore, vegetable oils epoxidized according to the present embodiment can impart sufficient properties (for example, mechanical properties and electrical properties) and environmental properties to the polymer product such as the high-voltage device without reducing the workability, and are not limited in, for example, kind and process (i.e. process relating to vegetable oil, such as picking, expression, extraction, refinement, degumming, deoxidation, decolorization, dewaxing and deodorization).

The above-discussed epoxidation is achieved by: epoxide synthesis using hydrogen peroxide (or a synthesis for epoxidizing an unsaturated bond portion in lignin); photooxidation; glycidyl-etherification (glycidyl-etherification with epihalohydrin); or the like.

The insulating polymer material composition is obtained by curing the epoxidized vegetable oils with heat (for example, by three-dimensionally crosslinking the epoxidized vegetable oils). At the time of the curing with heat, various curing agents may be suitably used in accordance with demand. As the curing agents, it may be possible to variously apply those who can cure the epoxidized vegetable oils with heat (or can three-dimensionally crosslink the epoxidized vegetable oils), and more specifically, those used in the petroleum-derived polymer material such as epoxy resins. In other words, the curing agent used in the present embodiment is not limited to the above-mentioned one.

Concrete examples of the curing agent are: polyamines (such as diethylenetriamine, isophorone diamine, diaminodiphenylmethane, diamine diamide, polyamide, polyamine modified with epoxide, and ketimine); acid anhydrides (such as dodecenylsuccinic anhydride, methylnadic anhydride, trimellitic anhydride, pyromelletic dianhydride); novolac-type phenol resins; phenolic polymers; polysulfides; polyester resins containing carboxylic acids; tertiary amines (such as benzyl methyl); imidazoles (such as 2-methyl imidazole); Lewis acids (such as BF₃ monoethylamine and BF₃ piperazine); aromatic sulfonium salts; aromatic diazonium salts; resol-type phenol resins; melamine resins having a methylol group.

Further, various curing accelerators may be suitably used in accordance with demand at the time of the curing with heat, for the purposes of improving a Tg propery, mechanical and electrical properties, temperature dependence of these properties, and workability (e.g. shortening of operation time), and of decreasing a temperature at which the curing with heat is accomplished. The curing accelerators may be those used in the petroleum-derived polymer material such as epoxy resins and are not particularly limited.

### EXAMPLES

The insulating polymer material composition of the present embodiment will be more readily understood with reference to the following Examples. First of all, an epoxidized linseed oil (available from DAICEL CHEMICAL INDUSTRIES, LTD. under the trade name of L-500 (CAS8016-11-3)) was prepared as a vegetable oil. Each curing agent as shown in the following Tables 1 and 2 was added to the epoxidized linseed oil in a certain amount (or in a stoichiometric amount) and then heated under its own conditions (such as curing temperature and curing time) to be cured (or to be three-dimensionally crosslinked), thereby obtaining insulating polymer material composition specimens S1 to S42 each.

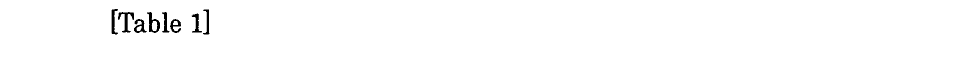

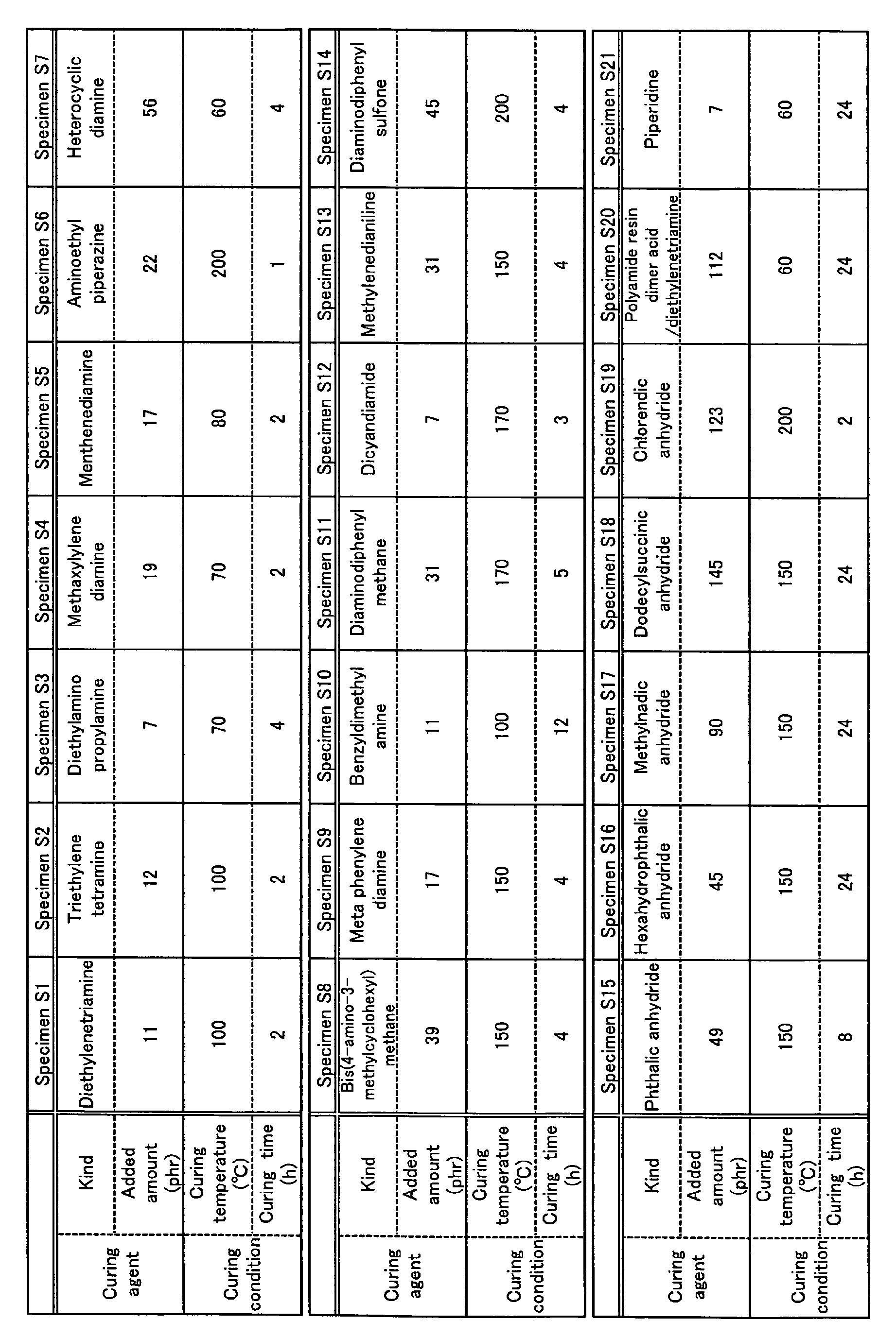

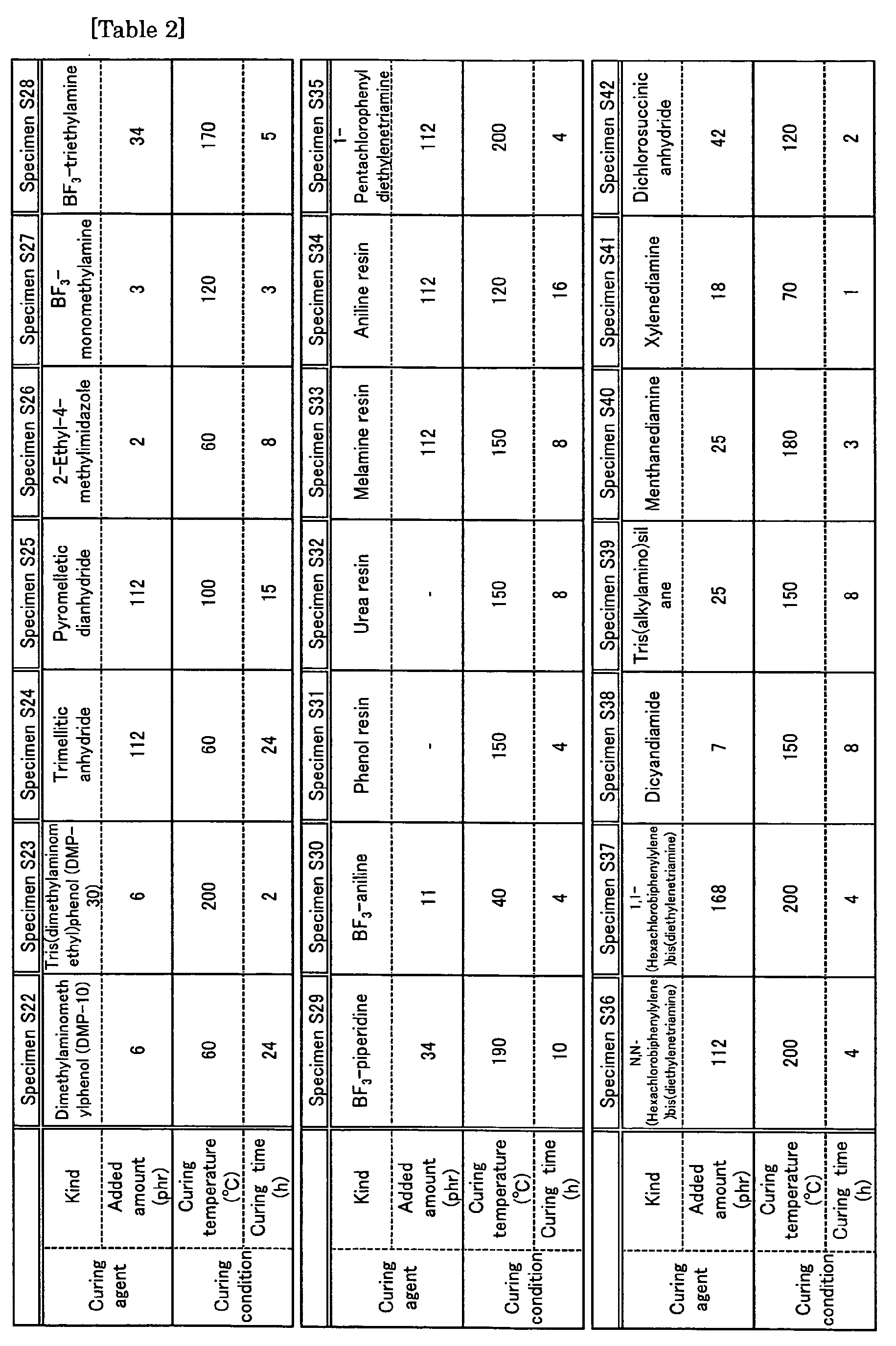

On the other hand, an epoxidized soybean oil (available from DAICEL CHEMICAL INDUSTRIES, LTD. under the trade name of S-300K (CAS8013-07-8)) was prepared in place of the above-discussed epoxidized linseed oil. Each curing agent as shown in the following Tables 3 and 4 (or each of the same curing agents as shown in Tables 1 and 2) was added to the epoxidized soybean oil in a certain amount (or in a stoichiometric amount) and then heated under its own conditions (such as curing temperature and curing time) to be cured (or to be three-dimensionally crosslinked), thereby obtaining insulating polymer material composition specimens T1 to T42 each.

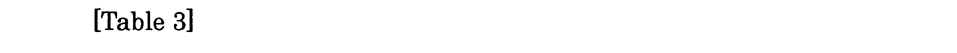

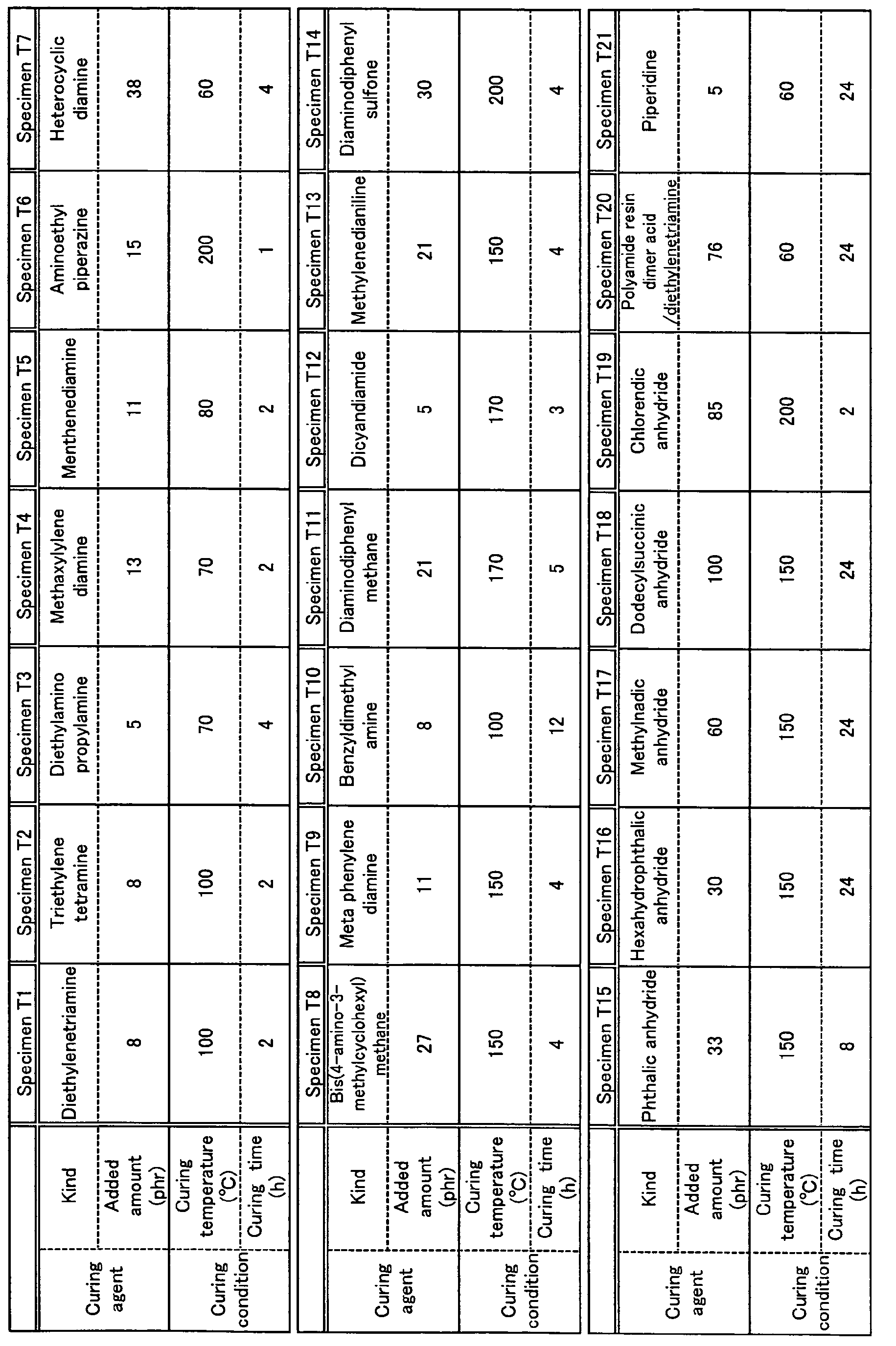

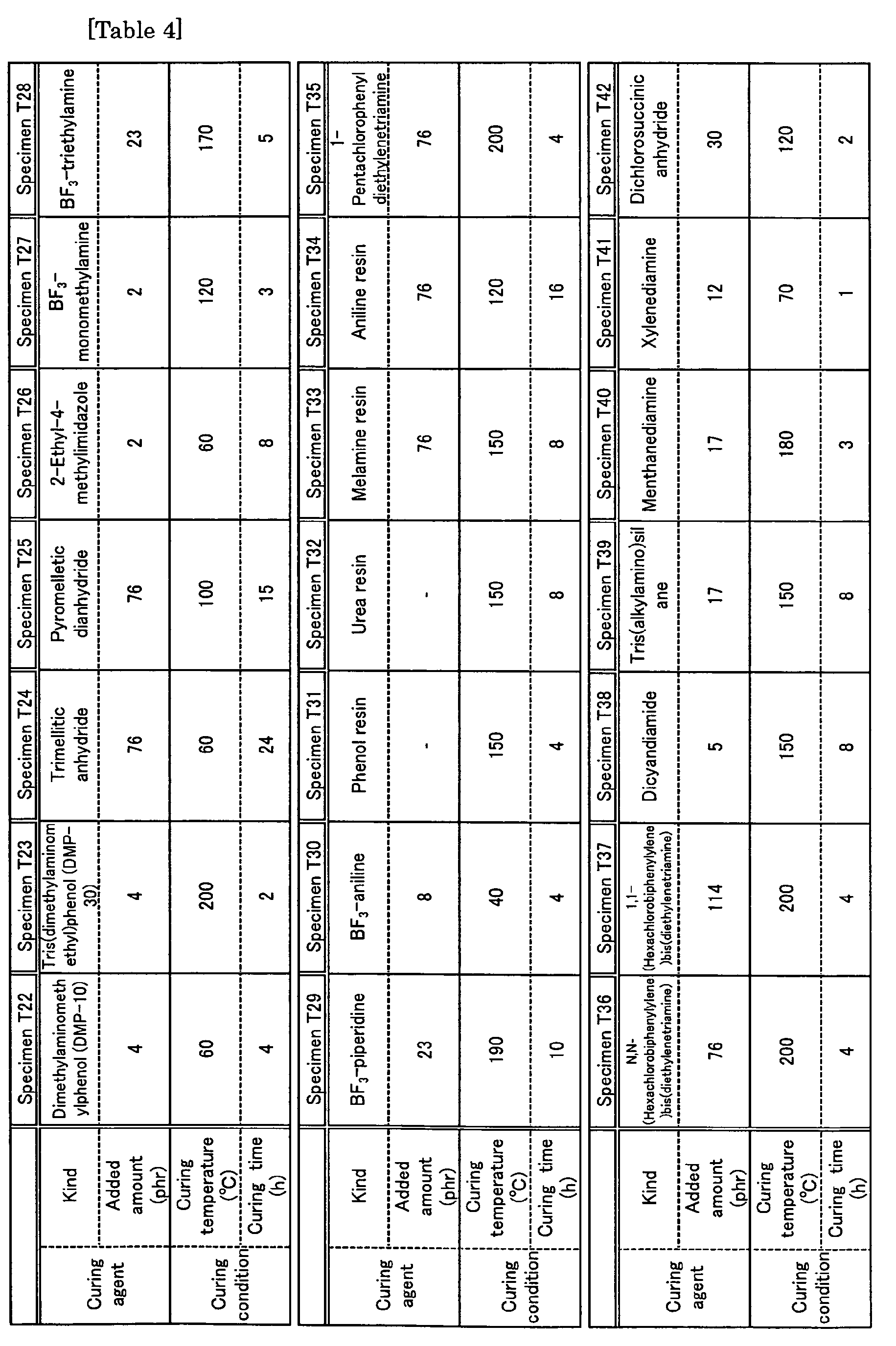

Furthermore, any one of curing agents as shown in the following Tables 5 and 6 (or any one of the same curing agents as shown in Tables 1 and 2) was added to a bisphenol-A-type epoxy resin (having an epoxy equivalent weight of about 190) in a certain amount (or in a stoichiometric amount) and then heated under its own conditions (such as curing temperature and curing time) to be cured (or to be three-dimensionally crosslinked), thereby obtaining insulating polymer material composition specimens P1 to P42 each.

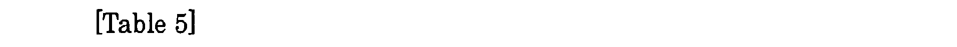

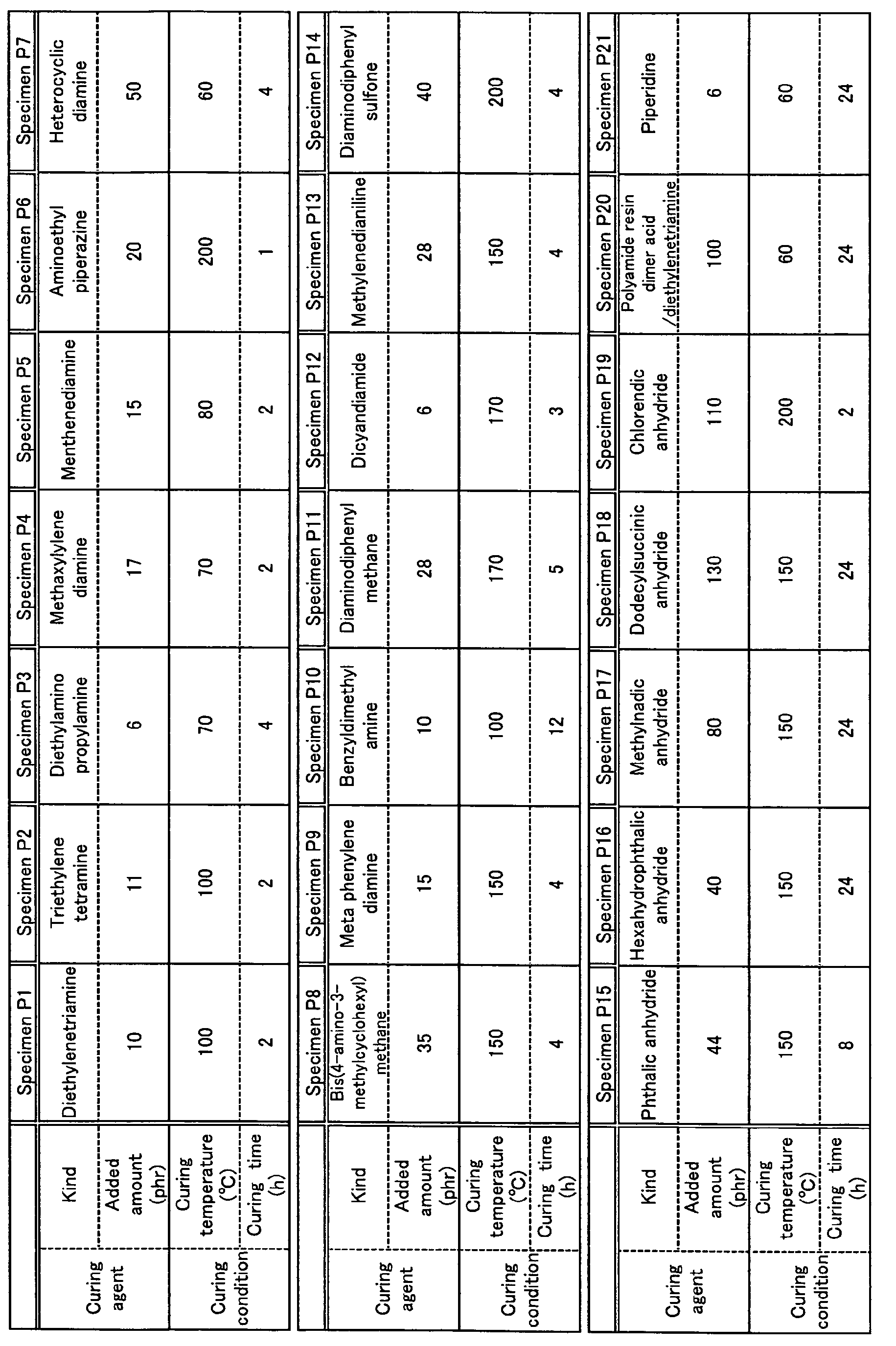

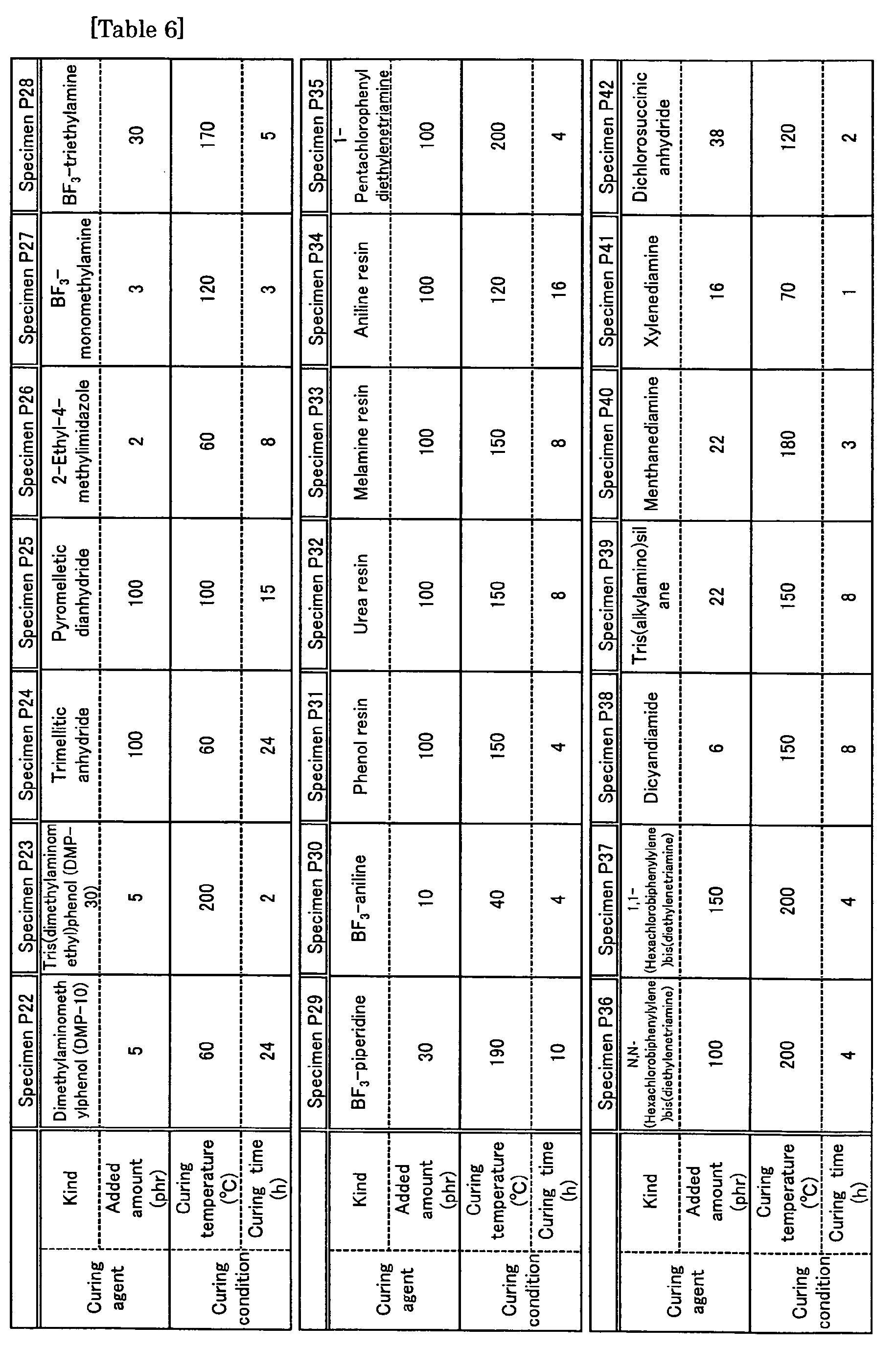

Then, each of the insulating polymer material composition specimens S1 to S42, T1 to T42 and P1 to P42 was measured in terms of: the volume resistivity as an electrical property (the insulating property); the tensile strength and tensile strain as mechanical properties (more specifically, as a property of a support structure applied to a polymer product and as the heat resistant stress against an embedded metal, respectively); and a strength value after each specimen had been embedded in soil for a certain period of time (hereinafter referred to as "a posterior strength value"), as the biodegradability. The thus obtained results are shown in the following Tables 7 to 12.

The rate of change of the posterior strength value, as shown in the following Tables 8 to 12, was determined as follows. First of all, No. 1-type test pieces (or test pieces having a thickness of 0.5 mm) were respectively prepared according to JIS K 7113 from the insulating polymer material composition specimens S1 to S42, T1 to T42 and P1 to P42, and then embedded in soil in a laboratory container (in an atmosphere of 30 °C and 80 % RH). Upon setting the specimens aside for 6 months, the posterior strength value was measured and compared with an initial value (or a tensile strength value before embedment in soil), thereby obtaining the rate of change (or the percentage of change where the initial value was defined as 100 %).

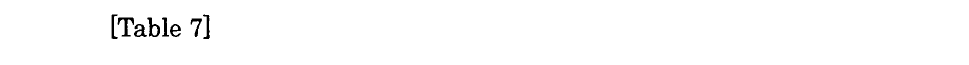

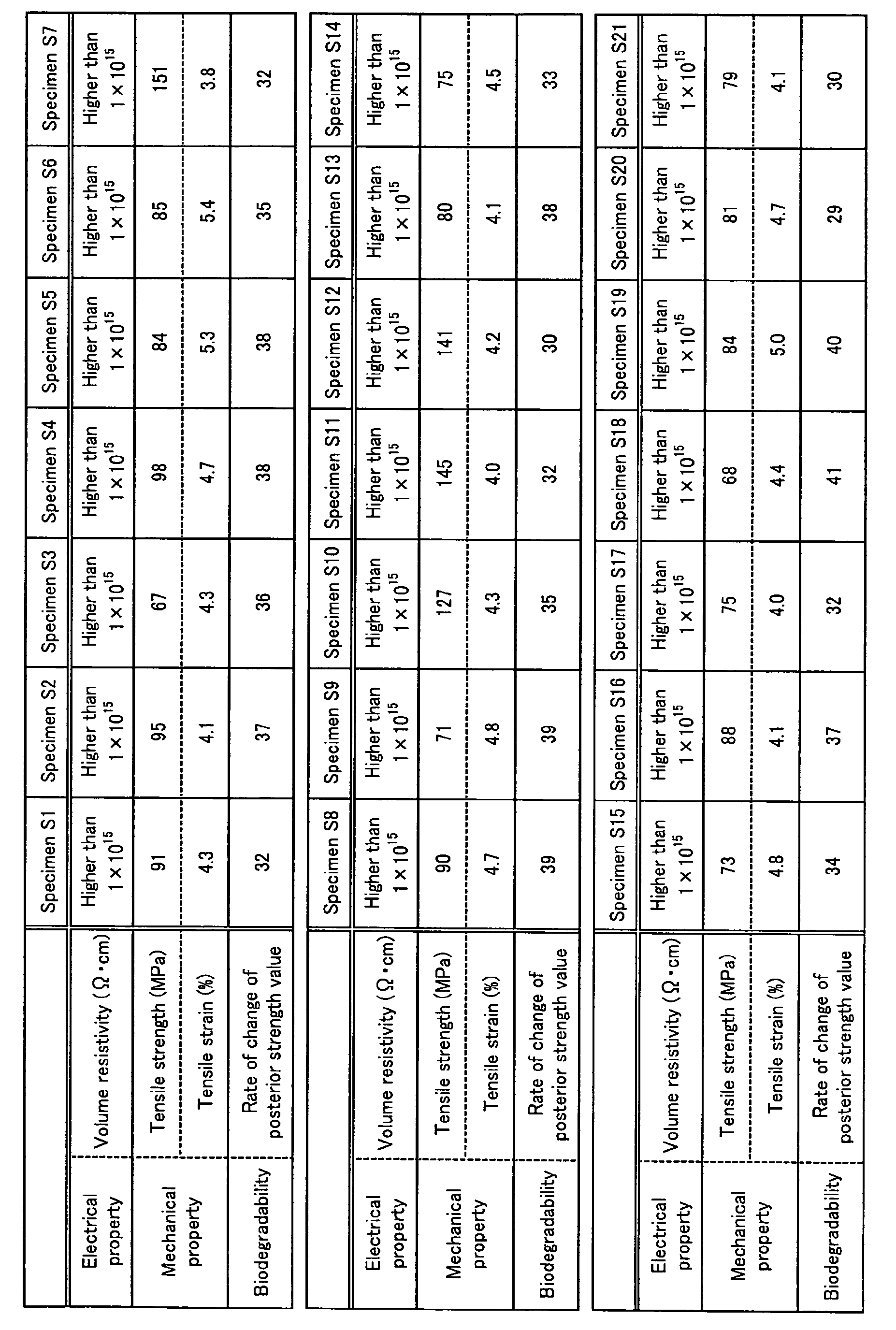

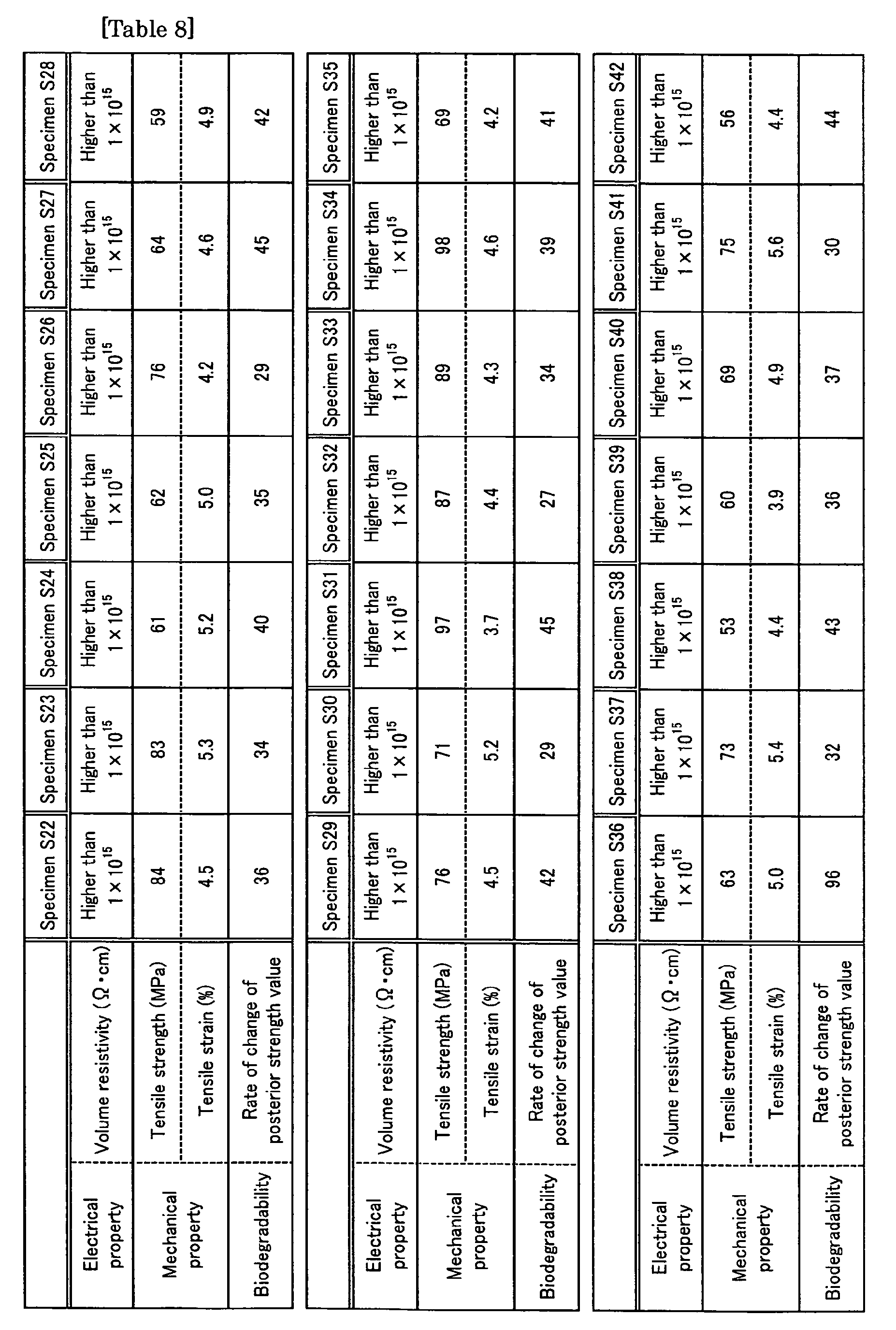

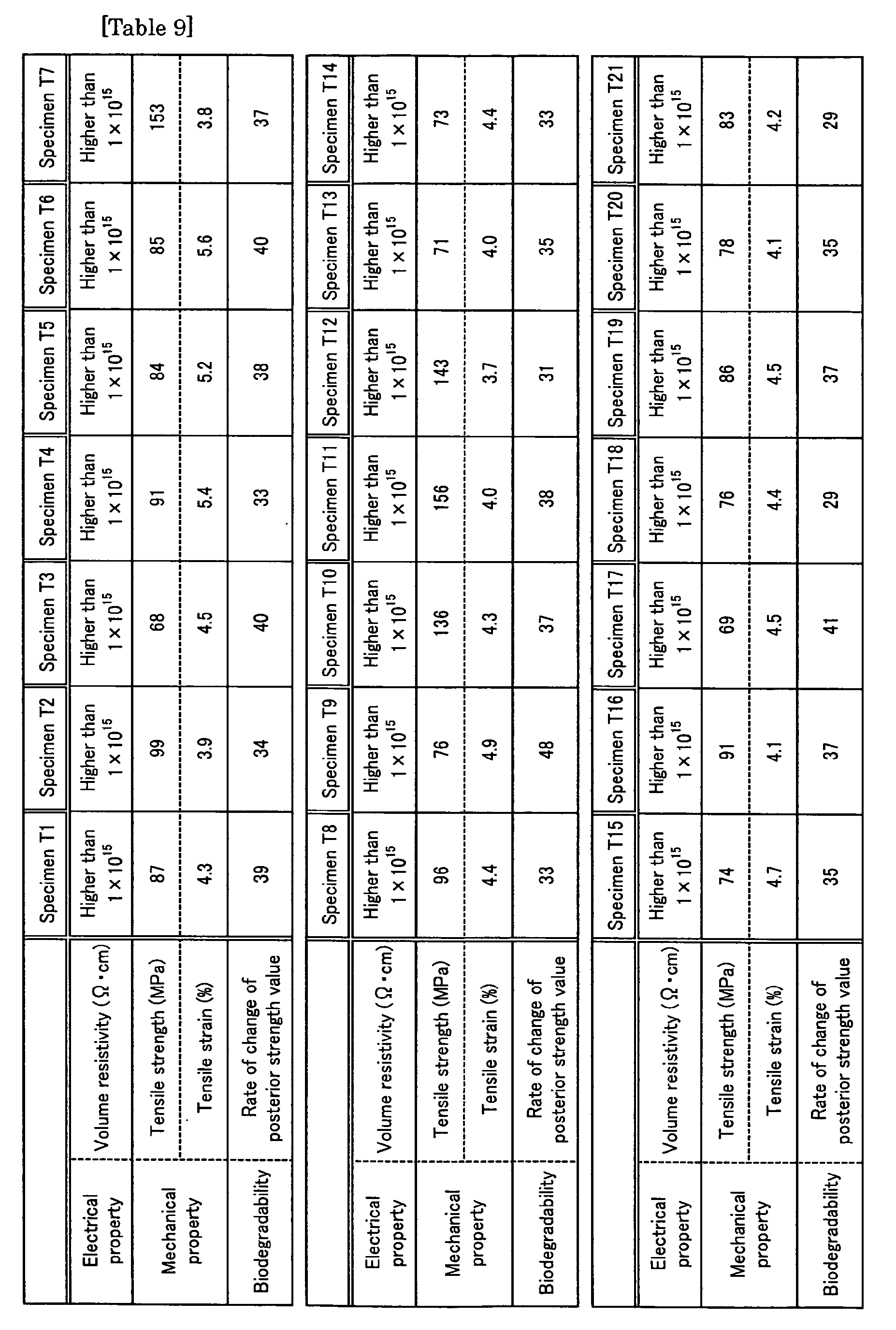

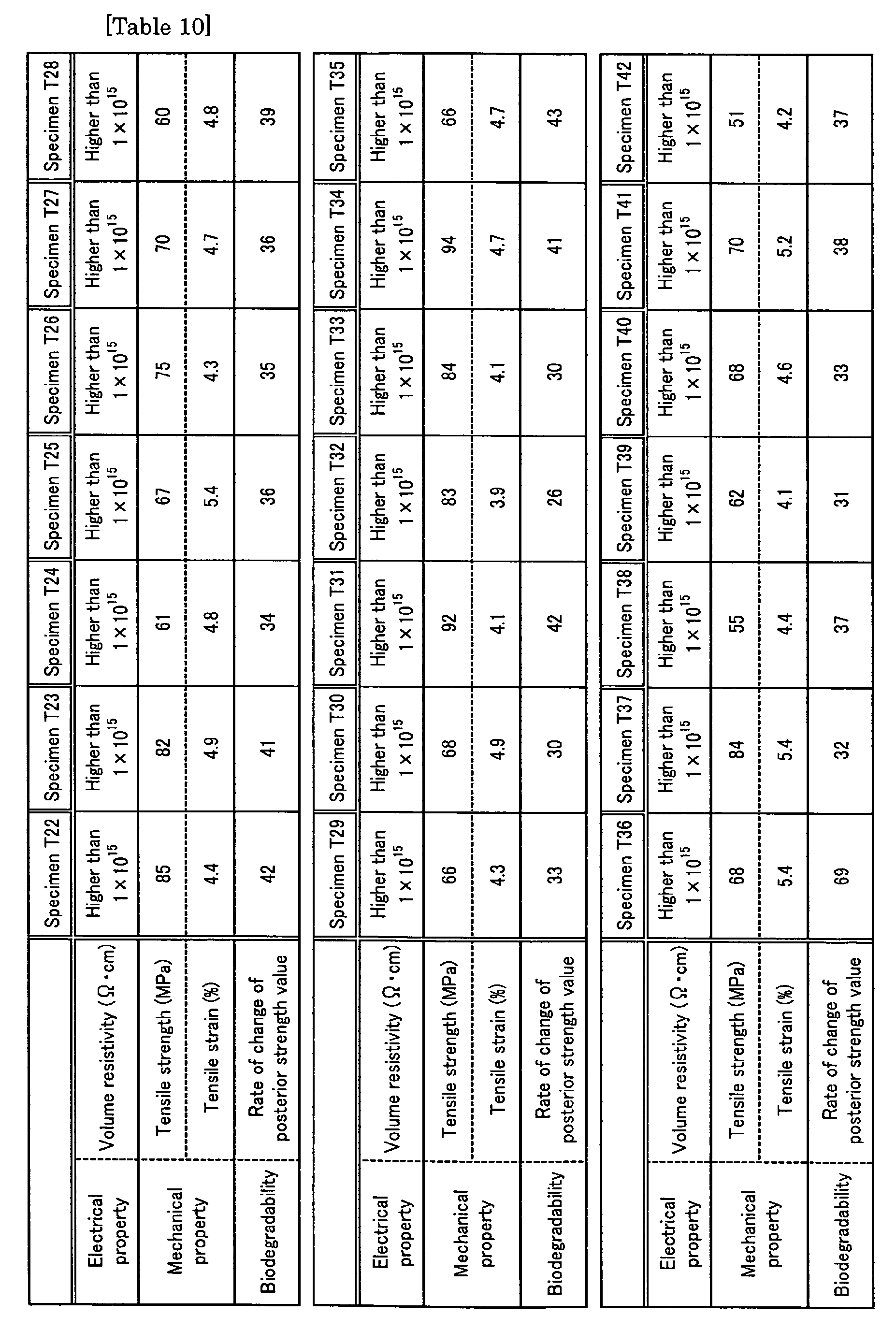

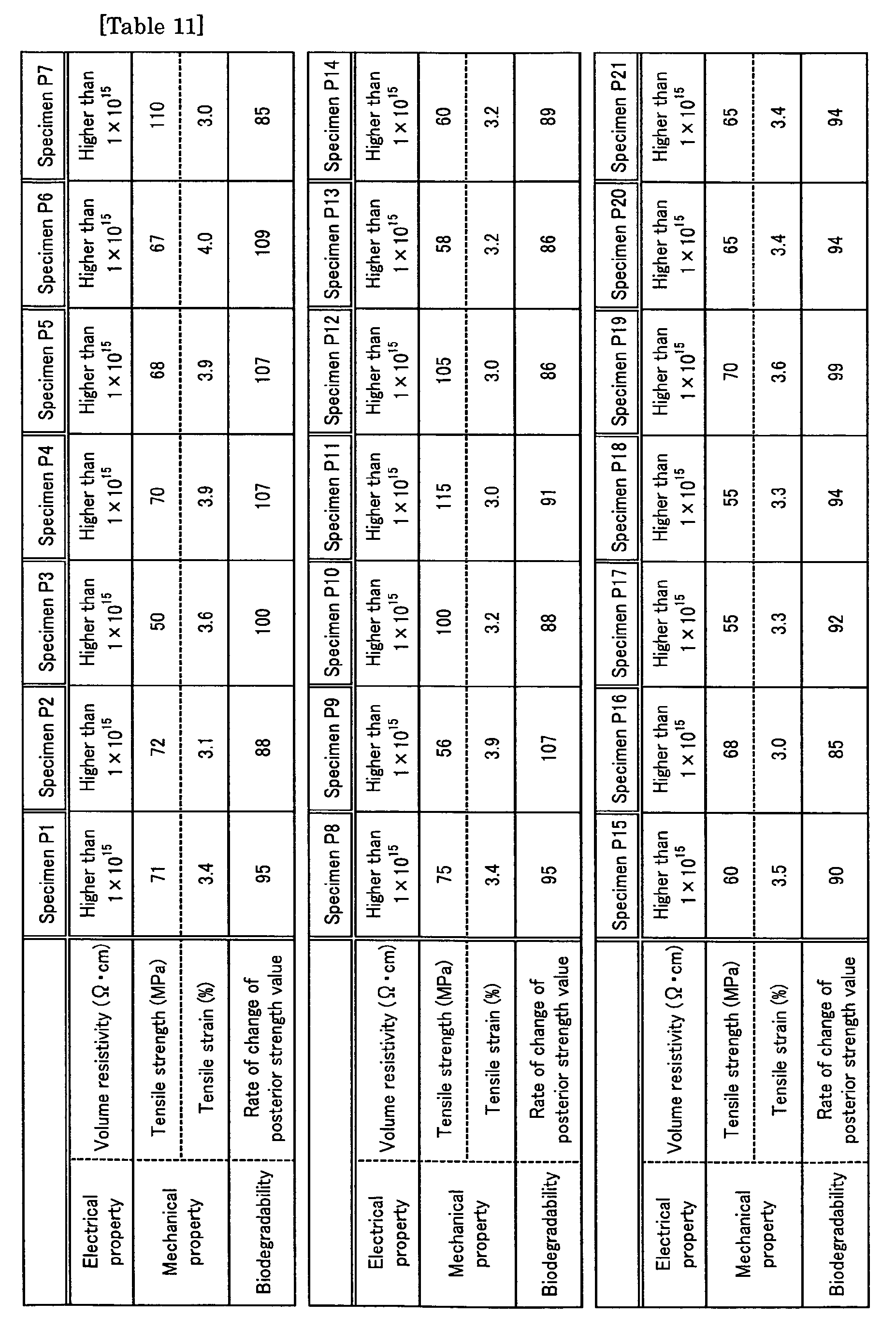

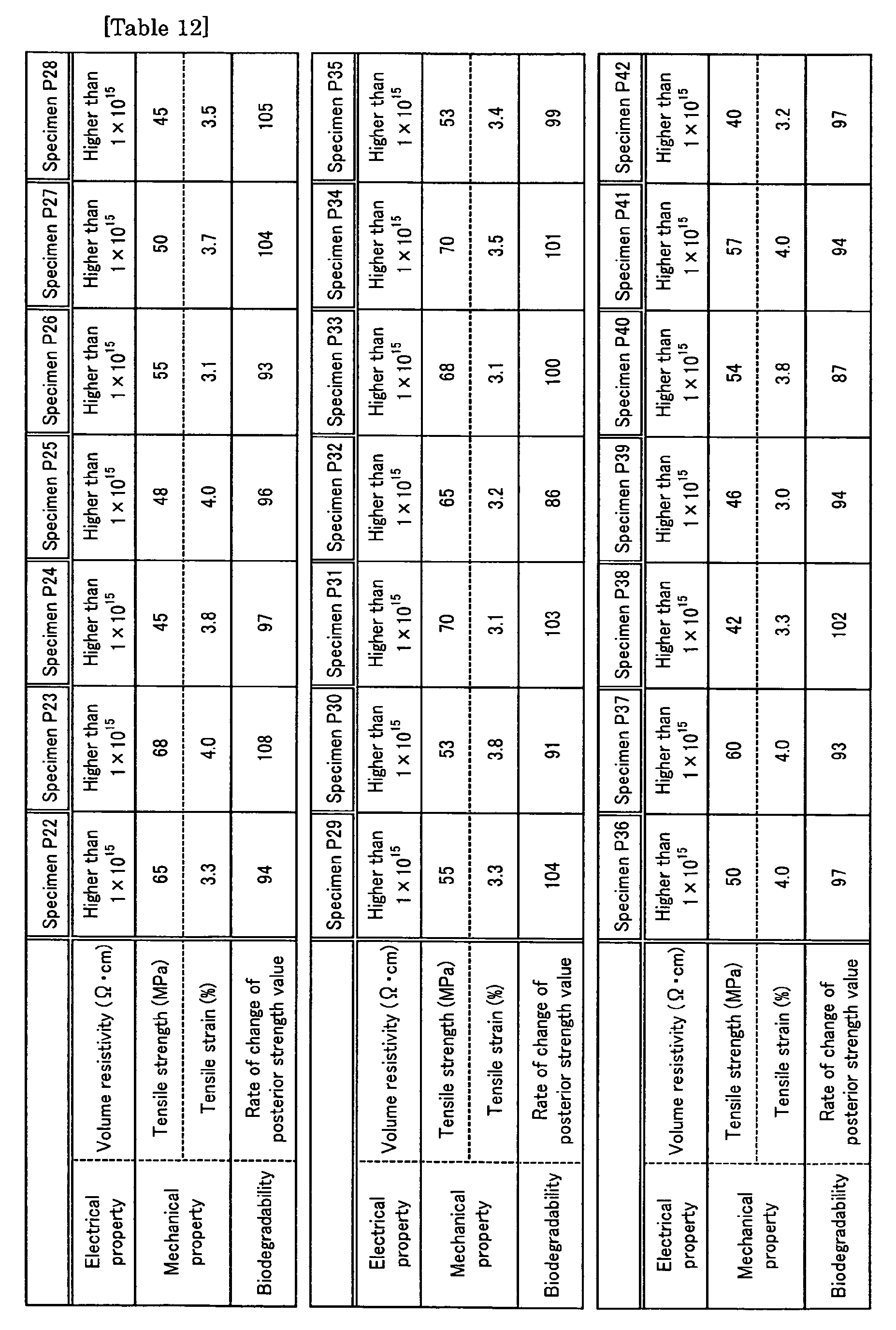

It is found from Tables 7 to 12 that the specimens S1 to S42 employing the epoxidized linseed oil and T1 to T42 employing the epoxidized soybean oil were sufficiently high in volume resistivity as well as the specimens P1 to P42 employing the bisphenol-A-type epoxy resin and were high in both tensile strength and tensile strain as compared respectively with the specimens P1 to P42 (or in comparison between the specimens using the same curing agent, for example, between the specimens S1 and P1). Additionally, it is found that the specimens S1 to S42 and T1 to T42 were largely lower than the specimens P1 to P42 in posterior strength value.

The vegetable oils used in the specimens S1 to S42 and T1 to T42 are an ester of glycerin and a fatty acid having a sufficient molecular length and therefore able to more ease a stress occurring when the epoxidized vegetable oils are cured than a stress occurring when the bisphenol-A-type epoxy resin is cured, which is considered as the reason for good tensile strength and good tensile strain of the specimens S1 to S42 and T1 to T42. Further, the vegetable oil in itself is naturally originated material and therefore susceptible to (or biodegraded by) microorganisms and enzymes in soil as compared with the specimens P1 to P42, which is considered to be the reason for the lower posterior strength value of the specimens S1 to S42 than the specimens P1 to P42.

Accordingly, it is found that a polymer product can be obtain excellent electrical and mechanical properties when the polymer product has such a polymer material composition as to be exemplified by the specimens S1 to S42 and T1 to T42. Concerning the disposal of the polymer product, it is found that deleterious substances and carbon dioxide are not generated in such a large quantity as conventional polymer products (e.g. a product formed of bisphenol-A-type resins) emitted, even if incinerated. Further, it is found that the polymer product is biodegraded with time when landfilled.

As discussed above, the embodiment of the present invention provides electrical and mechanical properties equal to or superior to those of the polymer material formed of conventional bisphenol-A-type epoxy resins without reducing the workability (for example, with ensuring a sufficient pot life), and additionally allows a contribution to global environmental protection.

Although the invention has been described in detail by reference to the above-described embodiments and examples, the invention is not limited to the embodiments and examples described above. Modifications and variations of the embodiments and examples described above will occur to those skilled in the art, in light of the above teachings.

For example, the present invention applies a vegetable oil (more specifically, an epoxidized vegetable oil) to a polymer material composition, and limits the effects of the vegetable oil neither in kind of the curing agent nor in curing conditions. Moreover, curing agents applicable to the present invention are not limited to those used in the present examples; for example, a mixture of two or more kinds of curing agents, an adduct thereof, salts thereof (e.g. dimethylaminomethylphenol) or the like can be applied to the present invention in view of an improvement in work environment and of shortening of operation time. Further, curing accelerators may be applied in addition to the curing agents.

Although the curing agent used in the present examples was in a stoichiometric amount for the purpose of comparing the specimens S1 to S42 and T1 to T42 respectively with P1 to P42, the added amount of the curing agent is variously changed as necessary and not limited to the values applied to the present examples. In general, it is known that the polymer material composition can obtain good electrical and mechanical properties when the added amount of the curing agent is adjusted to about 80 to 90 % of the stoichiometric amount.

Furthermore, the curing agent may be implicitly functionally used, for example, by being enclosed in a microcapsule or by being adsorbed on a molecular sieve.

## Claims

1. An insulating polymer material composition applied to an insulating structure for a voltage device, comprising:
a polymer material containing a vegetable oil as a main component and three-dimensionally crosslinked with heat.

2. An insulating polymer material composition as claimed in Claim 1, wherein the vegetable oil is epoxidized.

3. An insulating polymer material composition as claimed in any one of Claims 1 and 2, wherein a curing agent is added to the polymer material.

## Amended claims

### Amended claims under Art. 19.1 PCT

1. (Currently Amended) An insulating polymer material composition applied to an insulating structure for a voltage device, comprising:
a polymer material containing a vegetable oil as a main component and three-dimensionally crosslinked with heat thereby being formed into a molded product.

2. An insulating polymer material composition as claimed in Claim 1, wherein the vegetable oil is epoxidized.

3. An insulating polymer material composition as claimed in any one of Claims 1 and 2, wherein a curing agent is added to the polymer material.
